(19) Europäisches Patentamt
European Patent Office
Office européen des brevets

(11) **EP 4 059 754 B1**

(12) **EUROPEAN PATENT SPECIFICATION**

(45) Date of publication and mention
of the grant of the patent:
**18.09.2024   Bulletin 2024/38**

(21) Application number: **22162483.6**

(22) Date of filing: **16.03.2022**

(51) International Patent Classification (IPC):
**B60K 6/445** (2007.10)      **B60K 6/547** (2007.10)
**B60K 6/36** (2007.10)        **B60K 6/387** (2007.10)
**B60W 20/11** (2016.01)       **B60W 20/15** (2016.01)
**F16H 3/089** (2006.01)

(52) Cooperative Patent Classification (CPC):
**B60K 6/445; B60K 6/36; B60K 6/387; B60K 6/40;
B60K 6/485; B60K 6/547; B60W 10/02;
B60W 10/06; B60W 10/08; B60W 20/11;
B60W 20/15; F16H 37/046;** B60K 2006/4808;
B60K 2006/4825; B60W 2510/00;      (Cont.)

(54) **HYBRID ELECTRIC ARCHITECTURE FOR WORK VEHICLES**

HYBRIDE ELEKTRISCHE ARCHITEKTUR FÜR ARBEITSFAHRZEUGE

ARCHITECTURE ÉLECTRIQUE HYBRIDE POUR VÉHICULES DE TRAVAIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.03.2021  IT 202100006695**

(43) Date of publication of application:
**21.09.2022   Bulletin 2022/38**

(73) Proprietor: **CNH Industrial Italia S.p.A.
10156 Torino (IT)**

(72) Inventors:
• **Borghi, Alberto
  42033 Carpineti (RE) (IT)**
• **Pintore, Francesco
  41121 Modena (MO) (IT)**

(74) Representative: **CNH Industrial IP Department
Leon Claeysstraat 3A
8210 Zedelgem (BE)**

(56) References cited:
US-A- 5 508 574          US-A1- 2009 029 819
US-A1- 2018 029 584      US-A1- 2018 178 642
US-A1- 2019 039 449      US-B1- 6 549 840

(52) Cooperative Patent Classification (CPC): (Cont.)
B60W 2510/0638; B60W 2510/0657;
B60W 2510/081; B60W 2510/083;
B60W 2710/0644; B60W 2710/0666;
B60W 2710/081; B60W 2710/083;
B60W 2710/1011; B60W 2710/1022; Y02T 10/62

(52) Cooperative Patent Classification (CPC): (Cont.)
B60W 2510/0638; B60W 2510/0657;
B60W 2510/081; B60W 2510/083;
B60W 2710/0644; B60W 2710/0666;
B60W 2710/081; B60W 2710/083;
B60W 2710/1011; B60W 2710/1022; Y02T 10/62

**Description**

TECHNICAL FIELD

The invention concerns a hybrid electric architecture for vehicles, in particular work vehicles such as wheel loaders.

BACKGROUND OF THE INVENTION

Work vehicles like wheel loaders are known to operate in extremely variable speed conditions.

For example, this aspect particularly holds during operations that involve the moving of loose materials, such as demolition debris or raw minerals, aside of a working site and the loading of such material into or onto a conveying machine, e.g. a truck or a conveyor belt.

Indeed, the wheel loader is in this case supposed to move repeatedly back and forth between the working site and the conveying machine, which are in addition often placed quite near to each other.

Therefore, during the above operations, the wheel loader undergoes continuous accelerations and decelerations along a reduced movement space.

Furthermore, when the wheel loader uses its loading tool or bucket to shovel the materials, very low speeds and large traction torques are required, in comparison with common requirements for traction of passenger cars.

For the above reasons, wheel loaders usually mount a torque converter between the engine and the gearbox; a torque converter is a known hydraulic device for coupling the engine to the gearbox.

The torque converter is known to have the property of automatically decoupling the engine from the gearbox when the latter is subject to high torques, e.g. at lower speeds of the wheel loader, such that the latter can remain stationary while the engine is still operating.

As well, for lower torques on the gearbox that does not imply the decoupling, the torque converter has the property of multiplying the output torque.

When the torque converter operates as a torque multiplier, a significant portion of the input power is wasted in the form of heat generation, which provides for the need of a specific cooling means for avoiding the overheating of the torque converter.

In other words, although commonly implemented for their known useful decoupling properties, torque converters are less efficient and more complex than other hydraulic or mechanic transmissions that, although implying less energy dissipation, are not suitable for carrying out the functions of torque converters.

Therefore, a need is felt to provide improved solutions, e.g. in the form of new devices carrying out at least the same functions of the torque converters with increased efficiency.

US-A1-2019/039449 and US-A1-2009/029819 disclose examples of hybrid electric architectures.

US-B1-6549840, US-A-5508574, US-A1-2018/178642 and US 2018/029584 A1 disclose

further examples of hybrid electric architectures.

An aim of the invention is to satisfy the above-mentioned need, preferably in a simple and cost effective manner.

SUMMARY OF THE INVENTION

Such an aim is reached by a hybrid electric architecture for a vehicle as set forth in independent claim 1.

Dependent claims define particular embodiments of the invention.

BRIEF DESCRIPTION OF DRAWINGS

For a better understanding of the present invention, a preferred embodiment is described in the following, by way of a non-limiting example, with reference to the attached drawings, wherein:

- Figure 1 is a schematic representation of a hybrid electric architecture according to an embodiment of the invention;
- Figure 2 is a block diagram showing steps of a method suitable for controlling the hybrid electric architecture but not falling within the scope of the appended claims; and
- Figure 3 is a block diagram showing further steps of the method of Figure 2.

DETAILED DESCRIPTION OF THE INVENTION

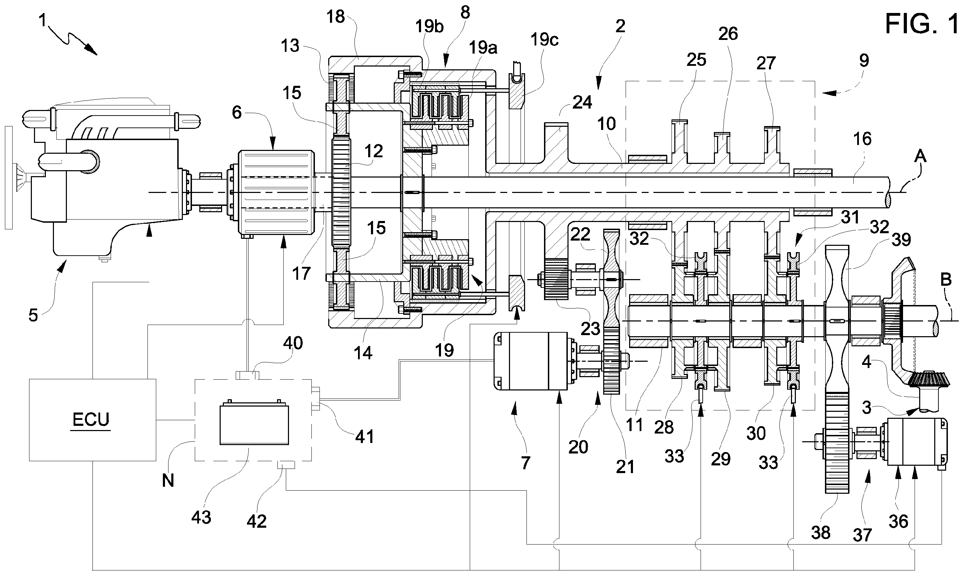

In figure 1, reference symbol 1 indicates a vehicle, in particular a work vehicle like a wheel loader. Vehicle 1 includes a hybrid electric architecture 2 and an axle 3 (only partially shown), in particular a rear axle, comprising the input shaft 4 of an automotive differential (not shown).

The architecture 2 is coupled to the axle 3 and configured to supply power thereto, during the operation of vehicle 1.

The architecture 2 comprises a plurality of machines, including an internal combustion engine 5 and two electric machines 6, 7. The electric machine 6 can operate as a generator and the electric machine 7 can operate as a motor. More precisely, both the electric machines 6, 7 comprise motor-generators for operating both as motors and as generators, e.g. depending on the actual operating conditions of vehicle 1.

The architecture 2 further comprises a planetary gear 8 that couples the engine 5 and the electric machines 6, 7. Moreover, the architecture 2 comprises a transmission 9 with an input shaft 10, which is connected to the planetary gear 8 to be driven thereby, and an output shaft 11, which is connected to the axle 3, such that the latter is driven by the transmission 9.

The planetary gear 8 includes a sun gear 12 and a ring gear 13, being in particular coaxial cylindrical gears around an axis A, as well as a planet carrier 14 arranged to rotate around axis A and carrying a plurality of planet gears 15 that meshes both with the sun gear 12 and the ring gear 13.

Here, planet gears 15 are cylindrical gears with respective axes parallel to axis A.

Specifically, the sun gear 12, the ring gear 13, and the planet carrier 14 are respectively connected to the electric machine 6, the input shaft 10, and the engine 5. However, the configuration of the three members of the planetary gear 8, i.e. the sun gear 12, the ring gear 13, and the planet carrier 14 may also be different, with respect to the other members of the architecture 2, i.e. the electric machine 6, the input shaft 10, and the engine 5.

With greater detail, the engine 5 has an output shaft 16 extending parallel to axis A, in particular along therewith; the output shaft 16 passes through the sun gear 12, although being rotationally free with respect to the latter, and couples to the planet carrier 14. In particular, the planet carrier 14 is keyed to the output shaft 16.

The electric machine 6 is arranged around axis A between the sun gear 12 and the engine 5, and so around the output shaft 16. The output shaft 16 passes through the electric machine 6, without being rotationally coupled thereto.

The electric machine 6 has a rotor shaft 17 that extends parallel to axis A, in particular along therewith, toward the sun gear 12, which is coupled to the same rotor shaft 17, for instance by means of a key or a spline coupling.

Furthermore, the planetary gear 8 has a hollow casing 18 that is fixedly coupled to the ring gear 13 and to the input shaft 10. Specifically, the casing 18 is realized in a single piece with the ring gear 8 and with the input shaft 10.

The hollow casing 18 houses the planet carrier 14. In particular, the hollow casing 18 has an axial symmetry with respect to axis A and, more in particular, is bell-shaped around axis A.

Preferably, the architecture 2 comprises a lock-up clutch 19 that is configured to interlock the engine 2 and the input shaft 10 or the planet carrier 14 and the ring gear 13, which means that the planet carrier 14 and the ring gear 13 are constrained to rigidly rotate together or to integrally rotate with each other. In other words, the lock-up clutch 19 has an engaged configuration, in which the transmission ratio between the engine 5 and the input shaft 10 is constant, precisely equal to one in the embodiment shown, and a disengaged configuration, in which the same transmission ratio is based on the operation of the electric machine 6 and, more in general, of vehicle 1.

The lock-up clutch 19 is housed within the casing 18 and arranged between the planet carrier 14 and the input shaft 10.

Specifically, the lock-up clutch 19 is a disk type friction clutch, in particular with a plurality of disks; essentially, in the embodiment shown, the lock-up clutch 19 includes a fixed portion 19a fastened to the planet carrier 14 and a movable portion 19b that is rotationally fixed and axially movable with respect to the casing 18, in particular in a sliding manner. Preferably, the movable portion 19b is coupled to the casing 18 through a spline coupling.

Both the fixed portion 19a and the movable portion 19b are arranged around axis A and thus they are coaxial.

The lock-up clutch 19 further includes a known-kind driving device 19c, for example electric or pneumatic, for driving the movable portion 19b between the engaged and the disengaged configuration of the lock-up clutch 19.

According to the invention, the electric machine 7 is arranged to be coupled to the transmission 9, in such a manner that an output torque of the electric machine 7 is transmitted or supplied to the transmission 9 in parallel to torques passing through the planetary gear 8.

In other words, the torque supplied by the electric machine 7 is transmitted to the transmission 9 bypassing the torque-splitting portion of the planetary gear 8, i.e. the planet carrier 14 and the planet gears 15.

The torque transmitted to the ring gear 13, which is the result of a mechanical balance between the torque at the planet carrier 14 and electric machine 6, i.e. at the output and rotor shafts 16, 17, sums up to the torque supplied by the electric machine 7. The sum of the torques is then transferred to the axle 3 via the transmission 9.

Hence, electric machine 7 is configured to supply torque to the ring gear 13. This torque is summed to a portion of the torque supplied by engine 5, which is the portion of torque transmitted from the planet carrier 14 to the ring gear 13 via the planet gears 15.

The electric machine 7 is coupled to the input shaft 10 of the transmission 9 by means of mechanical transmission elements. In particular, the architecture 2 comprises an ordinary gear train 20 to couple the electric machine 7 to the input shaft 10.

As shown in figure 1, the gear train 20 includes a first couple of meshing gears 21, 22, and a second couple of meshing gears 23, 24 arranged in series to the first couple, so as to form two successive reduction stages. Specifically, gear 21 is coupled (e.g. keyed) to a rotor shaft of the electric machine 7; gears 22, 23 are coupled (e.g. keyed) to an intermediate shaft; and gear 24 is coupled to (e.g. realized in a single piece with) the input shaft 10.

As further shown in figure 1, transmission 9 comprises a geared transmission or a gearbox that is adapted to establish multiple gear ratios between the input shaft 10 and the output shaft 11.

More precisely, transmission 9 comprises three gears 25, 26, 27, which are carried in a fixed manner by the input shaft 10. In particular, gears 25, 26, 27 are cylindrical gears. Conveniently, gears 25, 26, 27 are realized in a single body with the input shaft 10. Gears 25, 26, 27 have different diameters; in particular, gears 25 and 26 are respectively the greatest and the smallest ones. Gear 26 is arranged between the other two gears 25, 27 with respect to axis A.

Furthermore, transmission 9 further comprises other three gears 28, 29, 30, which are carried in a fixed manner by the output shaft 11. In particular, gears 28, 29, 30 are cylindrical gears. Conveniently, gears 28, 29, 30 are realized in a single body with the output shaft 11. Gears 28, 29, 30 are arranged to mesh respectively with gears 25, 26, 27, such that three different gear ratios are defined.

The output shaft 11 extends along an axis B parallel to axis A.

In order to select one of the gear ratios, the transmission 9 further comprise a shifting device 31 configured to engage each one of the gear ratios. Specifically, the shifting device 31 includes dog clutches 32 and driving devices 33 to drive the dog clutches 32 and accordingly allow the shifting from one gear ratio to another one as known in the art.

The architecture 2 comprises a further electric machine 36 that can operate at least as a motor. More precisely, the electric machine 36 comprises a motor-generator for operating both as a motor and as a generator, e.g. depending on the actual operating conditions of vehicle 1.

The electric machine 36 is arranged to be coupled to the transmission 9, in such a manner that an output torque of the electric machine 36 is supplied to the output shaft 11.

The electric machine 36 is coupled to the output shaft 11 of the transmission 9 by means of mechanical transmission elements. In particular, the architecture comprises an ordinary gear train 37 to couple the electric machine 36 to the output shaft 11, more in particular between the gears 28, 29, 30 and axle 3.

As shown in figure 1, the gear train 37 includes just a couple of meshing gears 38, 39 that form a single reduction stage. Specifically, gear 38 is coupled (keyed) to a rotor shaft of the electric machine 36, and gear 39 is coupled (keyed) to the output shaft 11.

Electric machines 6, 7, 36 comprise respective power converters 40, 41, 42, that are connected to an electric network N of the architecture 2. Such an electric network N includes a storage device, such as a battery 43, for storing the electrical energy generated by the electric machine 6, for example, as well as for supplying the stored energy to the electric machines 7, 36, for example.

The architecture 2 further comprises a control unit ECU, which is configured to control the engine 5 and the electric machines 6, 7. Control unit ECU is further configured to control the electric machine 36. Furthermore, control unit ECU is configured to control the lock-up clutch 19, in particular the driving device 19c. Moreover, control unit ECU is configured to control the shifting device 31, in particular the driving devices 33.

More precisely, control unit ECU controls the power converters 40, 41, 42.

Control unit ECU is electrically connected to each of the components controlled by the same control unit ECU.

The architecture 2 further comprises a plenty of transducers or sensors (not shown) coupled to control unit ECU for detecting quantities that are known to be indicative of operative parameters of the architecture 2, such as the actual output speeds of the electric machines 6, 7, 36, the actual output speed of the engine 5, the actual output torques of the electric machine 6, 7, 36, the actual output torque of the engine 5, and the required speed and torque at the output shaft 11. Unambiguously, each element of the above exemplary list of operative parameters shall be considered as singularly disclosed in an independent manner from the other elements, without any loss of generality. The term "actual" may be construed with the meaning of "current".

The transducers or sensors of the architecture 2 provide the control unit ECU with the necessary and sufficient information to feedback control the engine 5 and the electric machines 6, 7.

More precisely, the transducers or sensors include:

- a speed sensor to measure the output speed of the engine 5
- a torque sensor to measure the output torque of the engine 5; and
- speed sensors, to measure the output speeds of the electric machines 6 and 7.

Preferably, the transducers or sensors further include one to three additional speed sensors to measure correspondingly the speeds of one to all the three members of the planetary gear 8, i.e. the sun gear 12, the ring gear 13, and the planet carrier 14.

Control unit ECU is configured to extract information from the transducers or sensors about the detected or measured quantities and to evaluate, estimate, or predict in a known manner the operative parameters, for example by direct acquisition of the parameters, determination by means of physical formula or experimental models, estimation by means of observers, and the like, without any loss of generality.

In particular, control unit ECU determines or stores at least:

- parameters or signals indicative of the actual output speed and torque of engine 5;
- one parameter or signal indicative of the actual output speed of electric machine 7; and
- one parameter or signal indicative of the actual resistive or load or generator torque of electric machine 6.

More precisely, with load torque, it is intended the torque required by the electric machine 6 to generate electric energy. For example, this load torque can be actively controlled through electronic control devices, such as inverters.

Furthermore, control unit ECU stores information about the constructional features or mechanical properties of the planetary gear 8. It is known that planetary gears are characterized by a fundamental speed ratio, in particular entering the so called "Willis formula" and here indicated as $\tau_0$, where $\tau_0$ represents a speed ratio between the ring gear and the sun gear, assuming the planet carrier as fixed or locked up.

Other speed ratios, in particular three speed ratios can be identified between two members of the sun gear, the ring gear, and the planet carrier, assuming the other member as fixed or locked up. Those speed ratios are derivable from $\tau_0$, since being equal to $\tau_0$ itself when the planet carrier is fixed, $(\tau_0 - 1)/\tau_0$ when the sun gear is fixed, and $1 - \tau_0$ when the ring gear is fixed, as known.

Specifically, the above mechanical properties of the planetary gear 8 comprise the fundamental speed ratio thereof and, conveniently, the other speed ratios.

Control unit ECU is programmed or configured to execute a control method of the architecture 2 when the electric machines 6, 7 respectively operate as a generator and as a motor. In other words, control unit ECU stores computer programs comprising instructions for causing the architecture 2 to carry out the method of the invention.

As a first step 101 of the method, control unit ECU determines a desired output speed of the engine 5.

Preferably, the desired output speed of the engine 5 is determined based on a request of a driver of the vehicle 1, for example by means of a control device of vehicle 1, such as an accelerator pedal, button, or lever. More precisely, the desired output speed is determined as a function of the position or configuration of the control device.

With greater detail, control unit ECU controls the output speed of engine 5 setting the desired output speed as a target speed for the engine 5.

More precisely, the output speed of engine 5 is feedback controlled; in particular, control unit ECU applies a control law, for example a PID control law.

Furthermore, control unit ECU is configured to set the desired output speed, possibly multiplied to a gain representing a speed variation, e.g. due to a transmission, as an input in a stored model of a conventional torque converter.

Actually, control unit ECU is provided with information that is sufficient for determining an output torque and an output speed of the torque converter from an input speed of the torque converter.

Thanks to the stored model of the torque converter, control unit ECU is configured to determine an expected output of the torque converter in terms of output speed and torque, whose values can be used as references or targets for the input shaft 10. In other words, control unit ECU is configured to determine the speed and the torque with which the input shaft would have been driven if the modelled torque converter had replaced the planetary gear 8, provided that the input speed is the same and specifically equal or proportional to the determined desired output speed of the engine 5.

Precisely, the stored model is a mathematical model or a parametric model, i.e. a model defined by model parameters.

Preferably, the stored model or the information provided to control unit ECU is also sufficient for determining the input torque of the torque converter from the input speed thereof.

For example, the stored model may comprise a first table linking values of the input speed of the torque converter to values of the torque converter speed ratio _nue_. Moreover, the stored model may comprise a second table linking values of the speed ratio _nue_ for a given reference input speed to values of the torque converter torque ratio _mue_, the efficiency of the torque converter, and the input torque of the torque converter.

The tables may be provided on an experimental basis, for instance.

According to the stored model, the input torque of the torque converter for different input speeds than the reference one is obtainable as a product of the value of the input torque from the second table, according to the relevant value of the speed ratio _nue,_ and a corrective coefficient, which is given by a ratio between the squared actual input speed and the squared reference input speed. The usage of this corrective coefficient for modelling the torque converter is well known in the art; therefore, no further details will be provided in this regards for reasons of conciseness.

On the other hand, the torque ratio _mue_ and the efficiency are only functions of the speed ratio _nue._

Therefore, the values of the ratios _nue, mue_ allows the determination of the input torque, the output torque, and the output speed of the torque converter.

Hence, as a second step 102 of the method, control unit ECU determines the output torque and the output speed of the torque converter based on the stored information assuming the input speed of the torque converter as a given function of the desired speed of the engine 5, for example equal or proportional thereto. Preferably, control unit ECU determines also the input torque of the torque converter based on said information.

Then, as a third step 103 of the method, control unit ECU controls the electric machines 6, 7 based on respective reference parameters to drive the input shaft 10 according to the determined output speed and torque of the torque converter as target parameters.

The reference parameters are determined from the target parameters by using the knowledge of the mechanical properties of the planetary gear 8.

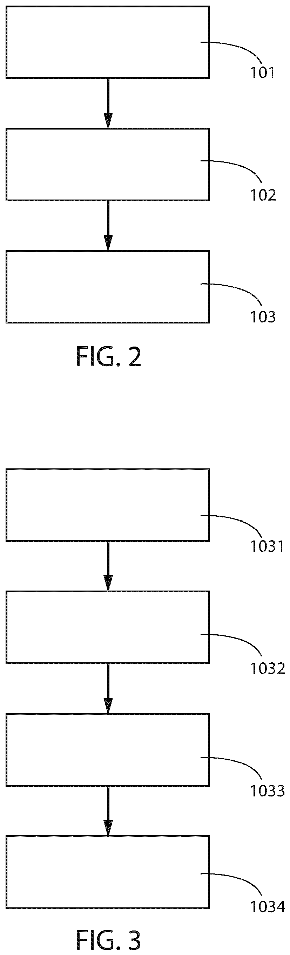

Figure 3 shows with greater detail a plurality of steps of step 103.

In step 1031, control ECU computes two ratios based on the mechanical properties of the planetary gear; the ratios represent respective fractions of the total power delivered by the engine 5, such that the sum of the two ratios is equal to one. More precisely, the second ratio represents the fraction of power delivered to the electric machine 6; therefore, the first ratio represents the fraction of power transmitted to the input shaft 10 through the planetary gear 8. In particular, the latter fraction of power will sum up to the amount of power delivered by electric machine 7 for supplying the axle 3.

The ratios are computed from the determined output of the torque converter, assuming the efficiency of the architecture 1 as ideal, i.e. equal to one.

For example, the first ratio is computed through the following formula:

$$X_t = \frac{\omega_R}{\omega_C} \cdot \frac{\tau_0 - 1}{\tau_0}$$

where $X_t$ is the first ratio, $\omega_R$ is specifically the speed of the ring gear 13, and $\omega_C$ is specifically the speed of the planet carrier 12. $\omega_R$ is computed by control unit ECU as equal to the determined output speed of the torque converter. Control unit ECU can compute $\omega_C$ from the desired output speed of the engine 5, since the planet carrier 12 is coupled to the engine 5. Indeed, control unit ECU stores in any case any necessary information about the mechanical properties of the coupling between the engine 5 and the planet carrier 12. Possibly, in case the input shaft 10 should be coupled to the ring gear 13 via a transmission, control unit ECU would store information about the mechanical properties of the transmission in order to compute $\omega_R$ from the output speed of the torque converter accordingly.

More in general, as derivable from the specific example above, the first ratio $X_t$ is computed as a ratio between speed ratios of the planetary gear 8. Both the two speed ratios involved in the computation are between the member of the planetary gear 8 that is coupled to the input shaft 10 (here, the ring gear 13) and the member of the same planetary gear 8 that is coupled to the engine 5 (here, the planet carrier 14). The speed ratio in the denominator is to be evaluated assuming the other member of the planetary gear 8 (here, the sun gear 12) as fixed. On the other hand, the speed ratio in the numerator is the actual speed ratio with all three members that rotate.

Actually, the ratio of the two speed ratios computed as above well indicates the percentage of the power delivered by the engine 5 that is supplied to the input shaft 10 via the planetary gear 8. Indeed, when the other member is fixed, all the power is transmitted through the members of the speed ratios.

Evidently, the second ratio (here indicated as $X_{vt}$) is computed as one minus the first ratio $X_t$.

In step 1032, control unit ECU computes two powers $P_{mt}$ and $P_{vt}$, that are the product of a power $P_{out}$ and respectively the ratios $X_t$, $X_{vt}$, where $P_{out}$ is the product of the output speed and torque of the torque converter, i.e. the target power for the input shaft 10.

$P_{vt}$ is the power delivered to the electric machine 6, whereas $P_{mt}$ is the power that from the engine 5 is transmitted to the input shaft 10 via the planetary gear 8.

Control unit ECU controls the electric machine 7 with the aim of delivering therefrom an amount of power equal to $P_{vt}$, i.e. the same power delivered to the electric machine 6.

In step 1033, control unit ECU computes torques $T_{mt}$, $T_{vt}$ by respectively dividing $P_{mt}$, $P_{vt}$ by $\omega_R$. Conveniently, $T_{vt}$ is set as a target output torque for the electric machine 7.

In the light of the mechanical properties of the planetary gear set 8, once a torque on one of the three members is retrieved, all the other torques can be derived accordingly as known in the art.

Here, in step 1034, control unit ECU determines the load torque of the electric machine 6 from $T_{mt}$, based on the mechanical properties of the planetary gear 8.

Conveniently, the determined load torque is set as a target load torque for the electric machine 6.

In an alternative example, the same steps can be conceptually merged together or changed to obtain the same result, i.e. the determination of the target torques for the electric machines 6, 7.

Advantageously, the electric machines 6, 7, are feedback controlled; in particular, control unit ECU applies a control law, for example a PID control law.

Therefore, the aforementioned reference parameters are a target output torque and a target load torque for the electric machines 6, 7, respectively.

Alternatively, the electric machines 6, 7 might be differently controlled, e.g. in open loop or according to a speed closed loop. In the latter case, the target speeds need to be determined from the output speed and torque of the torque converter, based on the mechanical properties of the planetary gear 8.

The electric machine 6 is adapted to generate electric energy for any possible speed of the rotor shaft 17 as a function of the speeds of engine 5 and input shaft 10.

Control unit ECU may control the electric machines 6, 7 to operate both as motors, for example, when a peak in the required torque at the output shaft 11 occurs.

Control unit ECU may control the driving device 19c to bring the lock-up clutch 19 in the engaged configuration when the desired speed of the engine 5 is almost stationary, e.g. when an increment or a derivative thereof is below a threshold, or equivalent conditions occur.

In addition, preferably, control unit ECU controls the electric machine 36 to operate as a motor and to supply entirely the required power at the output shaft 11, while the same control unit ECU controls the shifting device 31, in particular the driving devices 33, to carry out a shift of the currently engaged gear ratio.

In other words, the power for driving the axle 3 is held for a very short time by the electric machine 36 operating as a motor. In this way, the shifting device 31 can be operated freely since it is not subject to loads or torques, and the electric machine 36 is generating the appropriate traction power.

This way of operating the architecture 2 will be called E-shift.

In view of the foregoing, the advantages of the architecture 2 according to the invention are apparent.

In particular, the planetary gear 8 and the electric machines 6, 7 replace the torque converter of the prior art without losing any functionality but with an apparent gain in efficiency due to the replacement of a fluid coupling with electric components. Even more, the electric machine 6 generates electric energy that can be used for the traction via the electric machine 7. On the contrary, the torque converter of the prior art only dissipates energy to decouple the axle and the engine.

Furthermore, the planetary gear 8 and the electric machines 6, 7 can be cooled through cooling devices that are simpler and more economic than that used for cooling a torque converter. Indeed, the torque converter is a dissipative element and so requires a dedicated cooling device with high capacity of heat rejection. Similarly, the requirements for lubrication are different for a torque converter. Actually, a torque converter requires a specific dedicated assembly for providing a correct lubrication.

As a result of the above, the architecture 2 is simplified with respect to solutions employing the torque converter.

The presence of the electric machine 7, other than the electric machine 6 is particularly advantageous, since the electric machine 7 can freely provide torque to the input shaft 11 without affecting the dynamic equilibrium imposed by the constructional features of the planetary gear 8 to the electric machine 6 and to engine 5.

For example, without the electric machine 7, the electric machine 6 would be required to support the engine 5 in case of necessity; however, in that case, an increment in the torque supplied by the electric machine 6 should require a corresponding increment of torque supplied by the engine 5 due to the torque distribution caused by the planetary gear 8. Apparently, there may be conditions for which such an increase of torque by the engine 5 is not possible due to physical limits of the same engine 5. Those conditions, on the other hand, can be easily satisfied by employing the electric machine 7, which offers its output torque in parallel to that offered by engine 5.

Even more advantageously, electric machines 6, 7 can both work as motors to supply a significant amount of torque together with engine 5.

Moreover, since the electric machine 6 may operate as a generator even when a torque peak is exerted on axle 3, there is no actual need of a great electric energy storage and the battery 43 can have a reduced size accordingly.

Eventually, it is clear that modifications can be made to the described architecture 2 of the invention, which do not extend beyond the scope of protection defined by the claims.

In particular, the mechanical connections between the components of the architecture 2 may be different from those described and illustrated in the drawings. For example, various clutches or transmissions of any known kind can be interposed between such components. Moreover, the disclosed gearing transmissions may be simplified or be enriched by other gears and clutches. The control unit ECU may include one or more separate computing elements or portions.

**Claims**

1. A hybrid electric architecture (2) for a vehicle (1), in particular a work vehicle, the architecture comprising an internal combustion engine (5), a first electric machine (6) suitable for operating at least as a generator, a planetary gear (8), and a transmission (9) having an input shaft (10) and an output shaft (11), the output shaft being adapted to be coupled to an axle (3) of the vehicle (1),

   wherein the planetary gear (8) includes a first member, a second member, and a third member that are each comprising a corresponding one of a sun gear (12), a ring gear (13), and a planet carrier (14),
   the architecture (2) further comprising:

   - first means (16, 17, 18) to mechanically connect the first member, the second member, and the third member respectively to said engine (5), the first electric machine (6), and the input shaft (10);
   - a second electric machine (7) distinct from the first electric machine (6) and suitable for operating at least as a motor;
   - second means (20) to mechanically connect the second electric machine (7) to the transmission (9), such that a first drive torque from the third member and a second drive torque from the second electric machine (7) are supplied in parallel to the transmission (9); and
   - a control unit (ECU) configured to control the engine (5), the first electric machine (6), and the second electric machine (7);

   wherein the transmission (9) includes:

   - a gearbox for establishing a plurality of gear ratios between the input shaft (10) and the output shaft (11); and

- shifting means (31) for engaging each of the gear ratios;

the control unit (ECU) being further configured to control said shifting means (31); wherein said second means (20) are configured to mechanically connect the second electric machine (7) to the input shaft (10);
**characterized in that**
the hybrid electric architecture further comprises a third electric machine (36) suitable for operating at least as a motor and third means (37) to mechanically connect the third electric machine (36) to the output shaft (11), the control unit (ECU) being further configured to control the third electric machine (7), which is distinct from the second electric machine (6).

2. The hybrid electric architecture of any one of the foregoing claims, further comprising a lock up clutch (19) coupled to the first and the third member and configured to constraint the first member to rigidly rotate with the third member.

3. The hybrid electric architecture of any one of the foregoing claims, wherein:

   - the first member comprises the planet carrier (14);
   - the second member comprises the sun gear (12); and
   - the third member comprises the ring gear (13).

4. The hybrid electric architecture of any of the foregoing claims, further comprising electric storage means (43) connected to the first and second electric machine (6, 7) to store energy generated by the first electric machine (6) and to supply the stored energy to the second electric machine (7) for driving the transmission (9).

**Patentansprüche**

1. Hybridelektrischer Aufbau (2) für ein Fahrzeug (1), insbesondere ein Arbeitsfahrzeug, wobei der Aufbau einen Verbrennungsmotor (5), eine erste elektrische Maschine (6), die zumindest dazu geeignet ist, als Generator betrieben zu werden, ein Planetengetriebe (8) und ein Getriebe (9) mit einer Eingangswelle (10) und einer Ausgangswelle (11) aufweist, wobei die Ausgangswelle dazu eingerichtet ist, mit einer Achse (3) des Fahrzeugs (1) gekoppelt zu sein,

   wobei das Planetengetriebe (8) ein erstes Element, ein zweites Element und ein drittes Element umfasst, die jeweils eine Komponente aus einem Sonnenrad (12), einem Hohlrad (13) und einem Planetenträger (14) aufweisen, wobei der Aufbau (2) des Weiteren aufweist:

   - erste Mittel (16, 17, 18) zur jeweiligen mechanischen Verbindung des ersten Elements, des zweiten Elements und des dritten Elements mit dem Motor (5), der ersten elektrischen Maschine (6) und der Eingangswelle (10);
   - eine zweite elektrische Maschine (7), die sich von der ersten elektrischen Maschine (6) unterscheidet und die zumindest dazu geeignet ist, als Motor betrieben zu werden;
   - zweite Mittel (20) zur mechanischen Verbindung der zweiten elektrischen Maschine (7) mit dem Getriebe (9), so dass ein erstes Antriebsdrehmoment des dritten Elements und ein zweites Antriebsdrehmoment der zweiten elektrischen Maschine (7) parallel in das Getriebe (9) eingeleitet werden; und
   - eine Steuereinheit (ECU), die dazu eingerichtet ist, den Motor (5), die erste elektrische Maschine (6) und die zweite elektrische Maschine (7) zu steuern;

wobei das Getriebe (9) umfasst:

   - ein Schaltgetriebe, um eine Mehrzahl von Übersetzungsverhältnissen zwischen der Eingangswelle (10) und der Ausgangswelle (11) bereitzustellen; und
   - eine Schalteinrichtung (31), um jedes der Übersetzungsverhältnisse einzulegen;

wobei die Steuereinheit (ECU) des Weiteren dazu eingerichtet ist, die Schalteinrichtung (31) zu steuern;
wobei die zweiten Mittel (20) dazu eingerichtet sind, die zweite elektrische Maschine (7) mit der Eingangswelle (10) mechanisch zu verbinden;
**dadurch gekennzeichnet, dass**
der hybridelektrische Aufbau des Weiteren eine dritte elektrische Maschine (36), die zumindest dazu geeignet ist, als ein Motor betrieben zu werden, und dritte Mittel (37) zur mechanischen Verbindung der dritten elektrischen Maschine (36) mit der Ausgangswelle (11) aufweist, wobei die Steuereinheit (ECU) des Weiteren dazu eingerichtet ist, die dritte elektrische Maschine (7), die sich von der zweiten elektrischen Maschine (6) unterscheidet, zu steuern.

2. Hybridelektrischer Aufbau nach einem der vorhergehenden Ansprüche, der des Weiteren eine Sperrkupplung (19) aufweist, die mit dem ersten und dem dritten Element gekoppelt ist und die dazu eingerichtet ist, das erste Element einzuschränken, um drehfest mit dem dritten Element zu rotieren.

**3.** Hybridelektrischer Aufbau nach einem der vorhergehenden Ansprüche, wobei:

- das erste Element den Planetenträger (14) aufweist;
- das zweite Element das Sonnenrad (12) aufweist; und
- das dritte Element das Hohlrad (13) aufweist.

**4.** Hybridelektrischer Aufbau nach einem der vorhergehenden Ansprüche, der des Weiteren elektrische Speichermittel (43) aufweist, die mit der ersten und der zweiten elektrischen Maschine (6, 7) verbunden sind, um eine von der ersten elektrischen Maschine (6) erzeugte Energie zu speichern und die gespeicherte Energie der zweiten elektrischen Maschine (7) zum Antreiben des Getriebes (9) zuzuführen.

**Revendications**

**1.** Une architecture électrique hybride (2) pour un véhicule (1), notamment un véhicule de travail, l'architecture comprenant un moteur à combustion interne (5), une première machine électrique (6) adaptée pour fonctionner au minimum comme un générateur, un train planétaire (8), et une transmission (9) disposant d'un arbre d'entrée (10) et d'un arbre de sortie (11), l'arbre de sortie étant adapté pour être couplé à un essieu (3) du véhicule (1),

dans laquelle le train planétaire (8) comprend un premier élément, un deuxième élément et un troisième élément qui comprennent chacun un élément correspondant parmi un planétaire intérieur (12), une couronne dentée (13) et un porte-satellites (14), l'architecture (2) comprenant en outre :

- des premiers moyens (16, 17, 18) pour raccorder mécaniquement le premier élément, le deuxième élément et le troisième élément respectivement audit moteur (5), à la première machine électrique (6) et à l'arbre d'entrée (10) ;
- une deuxième machine électrique (7) distincte de la première machine électrique (6) et adaptée pour fonctionner au minimum comme un moteur ;
- des seconds moyens (20) pour raccorder mécaniquement la deuxième machine électrique (7) à la transmission (9), de telle sorte qu'un premier couple d'entraînement du troisième élément et un second couple d'entraînement de la deuxième machine électrique (7) sont fournis en parallèle à la transmission (9) ; et
- une unité de commande (ECU) configurée pour commander le moteur (5), la première machine électrique (6) et la deuxième machine électrique (7) ;

dans laquelle la transmission (9) comprend :

- une boîte de vitesses pour établir une pluralité de rapports de transmission entre l'arbre d'entrée (10) et l'arbre de sortie (11) ; et
- des moyens de changement de vitesse (31) pour engager chacun des rapports de vitesse ;

l'unité de commande (ECU) étant en outre configurée pour contrôler lesdits moyens de changement de vitesse (31) ;
dans laquelle lesdits seconds moyens (20) sont configurés pour raccorder mécaniquement la deuxième machine électrique (7) à l'arbre d'entrée (10) ;
**caractérisée en ce que**
l'architecture électrique hybride comprend en outre une troisième machine électrique (36) adaptée pour fonctionner au minimum comme un moteur et des troisièmes moyens (37) pour raccorder mécaniquement la troisième machine électrique (36) à l'arbre de sortie (11), l'unité de commande (ECU) étant en outre configurée pour commander la troisième machine électrique (7), qui est distincte de la deuxième machine électrique (6).

**2.** L'architecture électrique hybride selon l'une quelconque des revendications précédentes, comprenant en outre un embrayage de blocage (19) couplé au premier et au troisième élément et configuré pour contraindre le premier élément à tourner avec le troisième élément de manière rigide.

**3.** L'architecture électrique hybride selon l'une quelconque des revendications précédentes, dans laquelle :

- le premier élément comprend le porte-satellites (14) ;
- le deuxième élément comprend le planétaire intérieur (12) ; et
- le troisième élément comprend la couronne dentée (13).

**4.** L'architecture électrique hybride selon l'une quelconque des revendications précédentes, comprenant en outre des moyens de stockage d'énergie électrique (43) raccordés à la première et à la deuxième machine électrique (6, 7) pour stocker l'énergie générée par la première machine électrique (6) et pour fournir l'énergie stockée à la deuxième machine électrique (7) afin d'entraîner la transmission (9).

FIG. 1

FIG. 2

FIG. 3

**EP 4 059 754 B1**

**REFERENCES CITED IN THE DESCRIPTION**

**Patent documents cited in the description**

- US 2019039449 A1
- US 2009029819 A1
- US 6549840 B1
- US 5508574 A
- US 2018178642 A1
- US 2018029584 A1